# EUROPÄISCHE PATENTANMELDUNG

(11) **EP 4 279 637 A1**
(43) Veröffentlichungstag der Anmeldung: **22.11.2023**
(21) Anmeldenummer: 22173983.2
(22) Anmeldetag: 18.05.2022
(51) Int. Cl.: C25B 9/65, C25B 9/77, C25B 11/03, H01M 4/86, H01M 8/02, C25B 11/02

(54) **ELEKTRODENPLATTE MIT INTEGRIERTER STROMÜBERTRAGERSTRUKTUR UND ELEKTRODENPACKUNGSEINHEIT**

(71) Anmelder: Zentrum für Sonnenenergie- und Wasserstoff-Forschung Baden-Württemberg, 70563 Stuttgart (DE)
(72) Erfinder: Stürmer, Bernd, 71088 Holzgerlingen (DE); Hug, Wolfgang, 76123 Karlsruhe (DE); Brinner, Andreas, 71277 Rutesheim (DE)
(74) Vertreter: Patentanwälte Ruff, Wilhelm, Beier, Dauster & Partner mbB

(57) **Zusammenfassung**

1. Elektrodenplatte mit integrierter Stromübertragerstruktur und Elektrodenpackungseinheit.

2.2. Die Erfindung bezieht sich auf eine Elektrodenplatte für einen Stapelaufbau eines elektrochemischen Reaktors, die einen Plattenkörper (6) und eine integrierte Stromübertragerstruktur (7) beinhaltet, die einteiliger Bestandteil des Plattenkörpers ist und aus mindestens einem Stromübertragerkörper besteht, der in einem Stromübertragungsbereich (6a) des Plattenkörpers von einem Plattenhauptteil (6b) des Plattenkörpers vorstehend gebildet ist und eine vom Plattenhauptteil des Plattenkörpers beabstandete, zur Kontaktierung mit einer Bipolarplatte des Stapelaufbaus eingerichtete Plateaufläche (9) sowie eine die Plateaufläche mit einem Rand (10) des Stromübertragungsbereichs verbindende Verbindungsstruktur beinhaltet, sowie auf eine mit einer solchen Elektrodenplatte ausgerüstete Elektrodenpackungseinheit.

2.2. Erfindungsgemäß ist der Stromübertragerkörper ein von einem umgeformten Bereich des Plattenkörpers gebildeter Stromübertragerkorb (8) mit einer drucksteifen und elektrisch leitenden Korbseitenwand (8a), welche die Verbindungsstruktur bildet.

2.3. Verwendung z.B. in Elektrolysereaktoren oder Brennstoffzellenreaktoren.

## Beschreibung

Die Erfindung bezieht sich auf eine Elektrodenplatte für einen Stapelaufbau eines elektrochemischen Reaktors nach dem Oberbegriff des Anspruchs 1 und auf eine Elektrodenpackungseinheit nach dem Oberbegriff des Anspruchs 9 für einen Stapelaufbau eines elektrochemischen Reaktors.

Elektrodenplatten und Elektrodenpackungseinheiten dieser und ähnlicher Art werden beispielsweise in Blockstapelaufbauten von Elektrolysereaktoren, z.B. zur alkalischen Elektrolyse von Wasser unter Druck oder drucklos, und Brennstoffzellenreaktoren verwendet. In diesen auch als Blöcke oder Stacks bezeichneten Reaktorausführungen sind die einzelnen Komponenten zur Bildung einer Mehrzahl von elektrisch verkoppelten Reaktorzellen, d.h. Elektrolysezellen oder Brennstoffzellen, aufeinander bzw. aneinander gestapelt. Zu diesen Komponenten gehören insbesondere Zellmembranen, Bipolarplatten, Elektrodenplatten zur Bereitstellung der als Anode bzw. Kathode wirkenden Elektrodenflächen, Stromübertragerstrukturen zwischen der Bipolarplatte einerseits und einer jeweils angrenzenden Elektrodenplatte andererseits, Zellrahmen, in denen die plattenförmigen Komponenten randseitig gehalten sind, umlaufende Dichtungen, Endplatten und Verspannvorrichtungen zur druckfesten und flüssigkeitsdichten Verspannung aller Blockkomponenten zu einem Block. In der Praxis verwendete Blockstapelaufbauten bestehen typischerweise aus identischen, aufeinander geschichteten Zellanordnungen mit ca. 5 bis ca. 350 Zellen. Diverse Stapelaufbauten für solche elektrochemische Reaktoren sind in den Patentschriften US 4.124.478, US 4.339.324, US 4.758.322, US 6.117.287, US 6.555.267 B1 und EP 2 898 115 B1 sowie den Offenlegungsschriften US 2002/0110719 A1, US 2002/0175072 A1, US 2003/0188966 A1, US 2005/0019642 A1, US 2009/050472 A1, US 2010/0136455 A1, US 2010/0187102 A1, JP 2010-033788 A, DE 1 643 042, DE 27 29 640 A1, DE 10 2007 005 232 A1 und DE 102 59 386 A1 offenbart.

In einem solchen Blockstapel befinden sich in Stapelrichtung hintereinander jeweils eine Membran, eine Elektrodenplatte, eine Stromübertragerstruktur, eine Bipolarplatte, eine weitere Stromübertragerstruktur, eine weitere Elektrodenplatte und dann wieder eine Membran in sich wiederholender Anordnung. Die Stapelfolge von Elektrodenplatte, Stromübertragerstruktur, Bipolarplatte, Stromübertragerstruktur und Elektrodenplatte, die sich zwischen je zwei Membranen befindet, wird vorliegend wie üblich als Elektrodenpackungseinheit bezeichnet. In entsprechenden Ausführungen ist diese Elektrodenpackungseinheit als eigenständige Baueinheit vormontiert, wodurch dann für den Aufbau des Reaktorstapels je eine Elektrodenpackungseinheit und eine die Membran enthaltende Membraneinheit alternierend aneinander gestapelt werden. Eine derartige Vormontage ist jedoch für die Erfindung nicht zwingend, die vorliegend betrachtete Elektrodenpackungseinheit kann in entsprechenden alternativen Ausführungen auch ohne Vormontage gebildet werden, d.h. erst bei der Bildung des Blockstapels als lose Elektrodenpackungseinheit.

Die Bipolarplatte ist fluiddicht und insbesondere auch gasdicht ausgeführt und trennt die beteiligten Reaktionsfluide einschließlich der Produktgase jeweils zwischen zwei Zellen. Die Elektrodenplatten und die Stromübertragerstrukturen sind fluiddurchlässig ausgeführt, damit die Reaktionsfluide in den Zwischenräumen zwischen der Bipolarplatte einerseits und je einer der beiden angrenzenden Elektroden andererseits strömen und an die Membran gelangen können. Die Elektrodenplatten sind herkömmlich z.B. von Lochblechelementen gebildet, wobei die verbleibende metallische Elektrodenfläche im Vergleich zur Gesamtausdehnung der Elektrodenplatten ausreichend groß bleiben sollte, d.h. die Transparenz, i.e. der Öffnungsanteil, sollte nur so gering sein wie nötig. Die Stromübertragerstrukturen dienen, wie ihr Name sagt, zur elektrischen Stromübertragung zwischen der Bipolarplatte einerseits und den beidseits an die Bipolarplatte angrenzenden Elektrodenplatten andererseits, von denen z.B. die eine als Anode und die andere als Kathode wirkt.

Herkömmlich werden die Stromübertragerstrukturen zumeist als von den Elektrodenplatten separate Komponenten vorgefertigt und dann einerseits mit einer Elektrodenplatte und andererseits mit einer Bipolarplatte kontaktiert bzw. elektrisch leitend mit diesen verbunden. Für solche separaten Stromübertragerstrukturen sind verschiedene Typen geläufig. Ein erster Typ sind flexible bzw. elastische Metallgestricke oder Metallgewebe. Dieser Typ von Stromübertragerstrukturen kann den bei der Stapelmontage und/oder im Betrieb auftretenden Pressdruckbelastungen in hohem Maß nachgiebig ausweichen, hat jedoch die Schwierigkeit, dass die Kontaktpunkte des Gestrickes bzw. Gewebes zu den angrenzenden Platten nicht vordefiniert sind, was zu einer undefinierten Stromübergangsverteilung und/oder einer ungleichmäßigen Stromdichtebelastung auf den Elektrodenplatten bzw. den von diesen gebildeten Elektrodenflächen führen kann. Ein weiterer Typ von Stromübertragerstrukturen wird von vorgeformten Streckmetallelementen oder Lochblechelementen oder dgl. gebildet. Dieser Typ von Stromübertragerstrukturen kann definierte Kontaktpunkte zu den Elektrodenflächen und den Bipolarplatten bereitstellen, hat jedoch die Schwierigkeit, dass diese vergleichsweise starren Bauteile den genannten Pressdrücken allenfalls geringfügig elastisch nachgeben können. Zudem kann es bei diesem Typ zu punktuell hohen Stromdichtebelastungen kommen, wenn die gesamte Kontaktfläche zwischen Stromübertragerstruktur einerseits und Elektrodenplatte und/oder Bipolarplatte andererseits relativ klein gehalten wird, um Material und Gewicht einzusparen und die Durchlässigkeit des Zwischenraums zwischen Bipolarplatte und Elektrodenplatte bzw. Membran für die Reaktionsfluide möglichst wenig zu stören.

Bei dem in der vorliegenden Erfindung betrachteten Typ von Elektrodenplatten sind die Stromübertragerstrukturen integraler Bestandteil der Elektrodenplatten, indem die jeweilige Stromübertragerstruktur einteiliger Bestandteil des Plattenkörpers ist und aus mindestens einem Stromübertragerkörper besteht, der in einem Stromübertragungsbereich des Plattenkörpers von einem Plattenhauptteil des Plattenkörpers vorstehend gebildet ist und eine vom Plattenhauptteil beabstandete, zur Kontaktierung mit einer Bipolarplatte des Stapelaufbaus eingerichtete Plateaufläche und eine die Plateaufläche mit einem Rand des Stromübertragungsbereichs verbindende Verbindungsstruktur beinhaltet. In der Regel hat dieser Plattenkörper außerhalb des Stromübertragungsbereichs, d.h. im Bereich des Plattenhauptteils, eine im Wesentlichen plane Form, wobei der Plattenhauptteil eine Ebene des Plattenkörpers definiert, in welcher der Plattenkörper überwiegend liegt, üblicherweise auch als Plattenebene oder Hauptebene des Plattenkörpers bzw. der Platte oder Elektrodenplatte bezeichnet.

Die Patentschrift EP 3 770 303 B1 offenbart eine solche Elektrodenplatte der eingangs genannten Art mit integrierter Stromübertragerstruktur und eine damit ausgerüstete Elektrodenpackungseinheit, wobei dort die Verbindungsstruktur des Stromübertragerkörpers durch eine Mehrzahl von Stromübertragerarmen gebildet ist, die sich mit einem mäanderförmigen Verlauf von der Plateaufläche zum Plattenhauptteil erstrecken und die Plateaufläche senkrecht zu ihrer Flächenebene elastisch nachgiebig am Plattenhauptteil halten. Die Stromübertragerarme des Stromübertragerkörpers können im betreffenden Stromübertragungsbereich aus dem Plattenkörper durch Freistanzen zusammenhängend mit der Plateaufläche und durch anschließendes Umformen unter Herausdrücken der Plateaufläche aus der Ebene des Plattenkörpers gebildet sein.

Der Erfindung liegt als technisches Problem die Bereitstellung einer Elektrodenplatte und einer damit ausgerüsteten Elektrodenpackungseinheit der eingangs genannten Art zugrunde, die insbesondere hinsichtlich der verwendeten Stromübertragerstrukturen Vorteile gegenüber dem oben erwähnten Stand der Technik bieten.

Die Erfindung löst dieses Problem durch die Bereitstellung einer Elektrodenplatte mit den Merkmalen des Anspruchs 1 und einer Elektrodenpackungseinheit mit den Merkmalen des Anspruchs 9. Vorteilhafte Weiterbildungen und/oder Ausgestaltungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Bei der erfindungsgemäßen Elektrodenplatte ist der Stromübertragerkörper ein von einem umgeformten Bereich des Plattenkörpers gebildeter Stromübertragerkorb mit einer drucksteifen und elektrisch leitenden Korbseitenwand, welche die Verbindungsstruktur bildet. Mit anderen Worten besitzt der Stromübertragerkörper eine Korbform mit der Plateaufläche als Korbboden und der Korbseitenwand als mechanische und elektrisch leitende Verbindung zwischen dem Rand der Plateaufläche und dem Rand des betreffenden Stromübertragungsbereichs des Plattenkörpers bzw. seines Plattenhauptteils. Die Umformung des betreffenden Plattenkörperbereichs in den Stromübertragerkorb kann insbesondere mechanischer Art sein, speziell mittels Streckung des Plattenmaterials und/oder Einbringen und Weiten von Schlitzen bzw. Aussparungen. Durch geeignete Vorgabe des Designs der Stromübertragerstruktur bzw. Stromübertragerkörbe, wie hinsichtlich Länge und Abstände von Schlitzen bzw. Aussparungen, sind bei Bedarf auch relativ große Prägetiefen, d.h. Ausstellhöhen bzw. Korbhöhen der Stromübertragerkörbe realisierbar.

Unter der Charakterisierung drucksteif ist vorliegend zu verstehen, dass der Stromübertragerkorb und insbesondere seine Seitenwand den Drücken standhält, die auf ihn beim Aufbau des Stapels zur zugedachten Verwendung im entsprechenden elektrochemischen Reaktor sowie im anschließenden Reaktorbetrieb einwirken können, so dass es durch diese Druckbelastungen nicht zu bleibenden, inelastischen oder temporären, elastischen Verformungen der Korbseitenwand kommt.

Somit ist bei der erfindungsgemäßen Elektrodenplatte die Stromübertragerstruktur aus der Plattenfläche der Elektrodenplatte drucksteif und damit nicht-federnd ausgestellt und bildet dementsprechend in diesem umgeformten Bereich des Plattenkörpers der Elektrodenplatten eine spezielle, funktionale Ausformung aus dem Material der Elektrodenplatte aus. Form, Größe und Höhe dieser die Stromübertragerstruktur bildenden Ausformung können gezielt vorgegeben werden, und durch die Drucksteifigkeit der Korbseitenwände können gewünschte Abstände zwischen der Bipolarplatte einerseits und den benachbarten Elektrodenplatten im Stapelaufbau andererseits vorgegeben und beim Zusammenbau zu Blöcken bzw. Stacks eingestellt und im Betrieb beibehalten werden.

Aufgrund dieser Eigenschaften besitzt die erfindungsgemäße Elektrodenplatte signifikante Vorteile. Die Struktur der Elektrodenplatte als Plattenkörper mit einem oder mehreren, durch Umformung aus ihm heraus gebildeten bzw. aus seiner Plattenebene herausgedrückten, ausgestellten Stromübertragerkörben als integrierte Stromübertragerstruktur vereinfacht eine automatisierte Fertigung und ermöglicht eine einfache Anpassung der Elektrodenplatte an ein vorgegebenes Zellrahmendesign. Die drucksteife, druckfeste Ausführung des Stromübertragerkorbs und insbesondere von dessen Korbseitenwand ermöglicht die Aufnahme und Weiterleitung von Kräften, wie Gewichtskräften und betriebsbedingten Druckkräften, beim Bilden der Elektrodenpackungseinheit bzw. des elektrochemischen Stapels bzw. Blocks des Reaktors, in welchem die Elektrodenplatte verwendet wird. Dadurch brauchen die umgebenden Zellrahmen, in denen die Elektrodenplatten und die anderen Stapelaufbaukomponenten randseitig gehalten sind, nicht zwingend darauf ausgelegt werden, das Gewicht aufeinandergestapelter Elektrodenpackungseinheiten selbst tragen zu können. Der Stapel aus den Elektrodenpackungseinheiten ist mit Hilfe der drucksteifen Stromübertragerkörbe in der Lage, selbst sein eigenes Gewicht zu tragen, ohne dass sich die Stromübertragerstruktur aufgrund der Gewichtskräfte verformt.

Die drucksteife, druckfeste Konturierung der Stromübertragerkörbe stellt in Verbindung mit einer kraftschlüssigen bzw. stoffschlüssigen Verbindung mit einer Bipolarplatte eine stabile metallische Struktur bereit, die zur Kraftübertragung bzw. Gewichtskraftaufnahme geeignet ist, so dass die umgebenden Zellrahmen beispielsweise aus flexibleren Kunststoffmaterialien gefertigt werden können, was einen signifikanten Vorteil beim Zusammenbau von Blöcken bzw. Stacks aus vielen Zellen bietet. Die Stromübertragerstruktur kann auf diese Weise bei der erfindungsgemäßen Elektrodenplatte aufgrund der drucksteifen, festen Ausführung der Stromübertragerkörbe zu derjenigen Komponente im Block bzw. Stack herangezogen werden, mit der die Einhaltung notwendiger Abstände, um die Membran der Bipolarplatte gegen Beschädigung zu sichern, und die Aufrechterhaltung der betriebsnotwendigen Gas-/Flüssigkeitsräume in den Zellen sichergestellt werden kann.

Ein besonderer Vorteil der erfindungsgemäßen Elektrodenplatte liegt auch darin, dass der Stromübertragungsquerschnitt, der effektiv zu elektrischen Stromleitung durch die Stromübertragerstruktur zur Verfügung steht, vergleichsweise groß gehalten werden kann, da es nicht erforderlich ist, zur Fertigung der Elektrodenplatte mit der integrierten, ausgestellten Stromübertragerstruktur aus einem zugehörigen Plattenrohling einen signifikanten Anteil an Material auszustanzen oder anderweitig zu entfernen. Gleichzeitig hat der relativ hohe bleibende Materialanteil des Stromübertragerkorbs im Vergleich zu Stromübertragerstrukturen, bei denen ein signifikanter Anteil des Plattenmaterials aus dem Plattenkörper ausgestanzt oder in anderer Weise herausgenommen wird, den Vorteil, dass relativ viel Elektrodenfläche für die effektive Elektrodenfunktion, wie die Gasproduktion bei der Wasserelektrolyse, erhalten bleibt.

Die Drucksteifigkeit der Seitenwände der Stromübertragerkörbe ermöglicht eine genaue Formgebung für die Stromübertragerkörbe und die Einstellung eines gewünschten, vorgebbaren, gleichmäßigen festen Abstands der Elektrodenplatte zur benachbarten Bipolarplatte im Stapelaufbau des Reaktors bzw. in der Elektrodenpackungseinheit. Eine Rückstellung bzw. Rückverformung der Stromübertragerstruktur durch andauernde oder zeitlich variierende mechanische Belastungen, wie sie bei elastisch nachgiebigen Stromübertragerstrukturen auftreten kann, wird durch die drucksteife Ausführung des Stromübertragerkorbs vermieden.

Die Struktur bzw. das Konturdesign des aus dem Plattenkörper ausgestellten Stromübertragerkorbs kann problemlos an die vorgegebene Kontur der Elektrodenplatte angepasst werden. So kann die Kontur bzw. der Querschnitt des Stromübertragerkorbs beispielsweise kreisrund, oval bzw. elliptisch oder polygonal sein, d.h. der Stromübertragerkorb kann beispielsweise eine runde Napfform oder eine eckige Pyramidenstumpfform besitzen. Dies ermöglicht eine optimale Anpassung an die äußere Form der Elektrodenplatte, bei der es sich analog z.B. um eine kreisrunde, ovale, rechteckige oder anderweitig polygonale Plattenform handeln kann. Vorzugsweise werden über die Ausdehnung der Elektrodenplatte hinweg mehrere Stromübertragerkörbe derart angeordnet, dass sich über die Elektrodenplatte hinweg eine möglichst gleichmäßige Stromdichteverteilung im Betrieb ergibt.

Die Plateaufläche, d.h. der Boden des Stromübertragerkorbs, ist vorzugsweise plan geformt, was in der Regel eine optimale elektrische Kontaktierung des Stromübertragerkorbs mit der Bipolarplatte begünstigt. Die Verbindung der Plateaufläche zur Bipolarplatte lässt sich dergestalt realisieren, dass eine sichere, dauerhafte elektrische Stromübertragung mit der gewünschten Stromdichte ohne anwachsenden elektrischen Übergangswiderstand z.B. aufgrund von Oxidation und/oder Stromwärme in der Kontaktfläche möglich ist.

In einer Weiterbildung der Erfindung weist die Korbseitenwand eine Öffnungsstruktur auf, d.h. eine oder mehrere Öffnungen, insbesondere in Form von Schlitzen bzw. Aussparungen. Beim Umformen des entsprechenden Plattenkörperbereichs in den Stromübertragerkorb können sich die Öffnungen weiten, wodurch bei Bedarf die Materialstärke im umgeformten Bereich im Wesentlichen konstant gehalten werden oder jedenfalls eine Materialschwächung in diesem Bereich relativ gering gehalten werden, so dass dann der effektiv zur Stromleitung verfügbare Materialquerschnitt des Stromübertragerkorbs im Wesentlichen gleich groß wie der Plattenquerschnitt in diesem Bereich vor erfolgter Umformung gehalten werden kann. Die geweiteten Öffnungen können ein zerstörungsfreies Ausstellen der gewünschten Kontur des Stromübertragerkorbs mit Ausbildung der vorzugsweise planen Plateaufläche erleichtern und zudem zum Flüssigkeits- und/oder Gastransport durch die Elektrodenplatte hindurch genutzt werden, wie im Fall der Wasserelektrolyse zum Abtransport von Gasblasen auf die Rückseite der Elektrodenplatte in Richtung Bipolarplatte und zur Zufuhr von Elektrolyt zur Vorderseite der Elektrodenplatte. Dadurch kann der Transparenz- bzw. Öffnungsanteil für den übrigen Teil der Elektrodenplatte außerhalb der Bereiche der Stromübertragerkörbe, der für den Gas-/Flüssigkeitstransport in den Zwischenraum zwischen der Rückseite der Elektrodenplatte und der Bipolarplatte sowie zur gasproduzierenden Elektrodenplatten-Vorderseite benötigt wird, reduziert und die reaktionswirksame Elektrodenfläche der Elektrodenplatte erhöht werden. Je nach geforderter Strombelastung der Elektrodenplatte kann gegebenenfalls auf eine flächige Lochung der Elektrodenplatte außerhalb des Bereichs der Stromübertragerkörbe bzw. auf zusätzliche, über die Ausdehnung der Elektrodenplatte hinweg verteilte Oberflächenaussparungen verzichtet werden. In alternativen Ausführungen kann die Korbseitenwand vollständig geschlossen ausgeführt sein, wenn für die betreffende Anwendung bzw. Korbbildungsverfahren keine Schlitze oder anderweitige Öffnungen in der Korbseitenwand benötigt werden. Die alternative, geschlossene Seitenwandausführung besitzt eine vergleichsweise hohe Strombelastbarkeit bzw. Stromübertragungsfähigkeit.

In einer Ausgestaltung der Erfindung besitzt die Öffnungsstruktur einen Öffnungsflächenanteil von höchstens 45% einer Gesamtfläche der Korbseitenwand. In spezielleren Ausführungen beträgt der Öffnungsflächenanteil nur 30% oder weniger oder auch nur 10% oder weniger. Es zeigt sich, dass eine Öffnungsstruktur mit einem solchen Öffnungsflächenanteil je nach Anwendungsfall einen optimalen Kompromiss zwischen der Stromübertragungsfähigkeit und der Fluid-/Gasdurchlässigkeit bietet. Ein Öffnungsflächenanteil in der Größenordnung um 45% ermöglicht, dass entsprechend viel Gas/Flüssigkeit den Stromübertragerkorb passieren kann, ein Öffnungsflächenanteil im Bereich von ca. 30% stellt einen entsprechend etwas geringeren Gas-/Flüssigkeitsdurchtritt zur Verfügung, während bei einem Öffnungsflächenanteil von nur ca. 10% bzw. z.B. im Bereich zwischen 5% und 20% entsprechend weniger Gas/Flüssigkeit passieren kann, dafür jedoch die elektrische Stromübertragungsfähigkeit und die Druckfestigkeit des Stromübertragerkorbs entsprechend größer sind. In alternativen Ausführungen kann der Öffnungsflächenanteil der Öffnungsstruktur der Korbseitenwand auch über 45% liegen, wenn dies für den betreffenden Anwendungsfall günstig ist.

In einer Ausgestaltung der Erfindung weist die Öffnungsstruktur mindestens eine axiale Schlitzöffnung auf, die sich mit einer Hauptrichtungskomponente in Korbaxialrichtung, d.h. ganz oder jedenfalls überwiegend in diese Richtung, erstreckt. Das Einbringen solcher Schlitzöffnungen ist fertigungstechnisch relativ einfach realisierbar und erweist sich im Hinblick auf das Aufweitungsverhalten beim Umformen bzw. Ausstellen des Stromübertragerkorbs als günstig. Die axialen Schlitzöffnungen im Stromübertragerkorb werden durch Einbringen entsprechend radial verlaufender Schlitze in den Plattenkörper vor dem Umformen des entsprechenden Bereichs in den Stromübertragerkorb gebildet. In alternativen Ausführungen weist die Korbseitenwand keine Öffnungsstruktur mit axialer Schlitzöffnung auf.

In einer Ausgestaltung der Erfindung weist die Öffnungsstruktur mindestens eine transverale Schlitzöffnung auf, die sich mit einer Hauptrichtungskomponente in Korbumfangsrichtung erstreckt. Es zeigt sich, dass die transversale Schlitzöffnung fertigungstechnisch einfach realisierbar ist, insbesondere durch Schlitzen des betreffenden Bereichs des Plattenkörpers vor dem Umformen bzw. Ausstellen des Stromübertragerkorbs in Umfangsrichtung, und hinsichtlich ihres Aufweitungsverhaltens beim Ausstellen des Stromübertragerkorbs günstig ist. In alternativen Ausführungen weist die Korbseitenwand keine Öffnungsstruktur mit transversaler Schlitzöffnung auf, wenn dies für entsprechende Anwendungen günstig ist.

In einer Ausgestaltung der Erfindung weist die Öffnungsstruktur mindestens eine Klappenöffnung auf, die durch Schlitzen und einseitiges Umbiegen eines korrespondierenden Plattenkörperbereichs gebildet ist. Das Formen der entsprechenden Öffnung der Öffnungsstruktur als eine solche Klappenöffnung kann das Abführen von Gasen von der Vorderseite der Elektrodenplatte zu ihrer Rückseite unterstützen. In alternativen Ausführungen besitzt die Korbseitenwand keine Öffnungsstruktur mit Klappenöffnung, wenn dies für die betreffende Anwendung nicht erforderlich ist.

In einer Weiterbildung der Erfindung weist der Stromübertragerkorb an seinem Rand, d.h. an seinem Übergang zum angrenzenden planen Plattenkörperbereich der Elektrodenplatte auf seiner dem Korbboden bzw. der Plateaufläche gegenüberliegenden Seite, einen Korbdurchmesser von höchstens 60mm auf. In entsprechender Ausgestaltung beträgt der Korbdurchmesser höchstens 40mm. Es zeigt sich, dass diese Dimensionierung des Stromübertragerkorbs für viele Anwendungsfälle optimal ist. Der relativ geringe Korbdurchmesser von höchstens ca. 60mm oder in vielen Fällen auch nur von ca. 40mm oder weniger, z.B. nur ca. 30mm bis ca. 35mm, kann dazu beitragen, den Anteil elektrodenaktiver planer Plattenfläche an der Gesamtfläche der Elektrodenplatte relativ groß zu halten. Dabei kann dennoch eine relativ große Ausstelltiefe, d.h. axiale Höhe, des Stromübertragerkorbs bereitgestellt werden, z.B. eine Ausstelltiefe von ca. 15mm oder allgemeiner zwischen ca. 3mm und ca. 25mm. In alternativen Ausführungen werden, wenn sich dies für entsprechende Anwendungen als günstig erweist, Stromübertragerkörbe mit einem Korbdurchmesser von mehr als 60mm verwendet.

In einer Weiterbildung der Erfindung ist der Stromübertragerkorb eine Tiefziehstruktur, d.h. der Stromübertragerkorb ist als eine Struktur gebildet, die durch einen herkömmlichen Tiefziehvorgang aus dem Plattenkörper herausgeformt ist. Dies stellt eine vorteilhafte fertigungstechnische Realisierung des Stromübertragerkorbs dar. Alternativ zu dieser Bereitstellung des Stromübertragerkorbs mittels eines Tiefziehvorgangs kann der Stromübertragerkorb durch ein anderes herkömmliches, vergleichbares, vorzugsweise mechanisches Umformverfahren, alternativ ein anderes herkömmliches Strukturbildungsverfahren bzw. formgebendes Verfahren, wie ein Gießverfahren, gebildet sein, welches das gleiche Strukturergebnis liefert.

Die erfindungsgemäße Elektrodenpackungseinheit beinhaltet eine fluiddichte Bipolarplatte, eine erste Elektrodenplatte und eine zweite Elektrodenplatte, die auf gegenüberliegenden Seiten der Bipolarplatte angeordnet sind, sowie eine erste Stromübertragerstruktur zur elektrischen und mechanischen Verbindung der Bipolarplatte mit der ersten Elektrodenplatte und einer zweiten Stromübertragerstruktur zur elektrischen und mechanischen Verbindung der Bipolarplatte mit der zweiten Elektrodenplatte, wobei die erste Elektrodenplatte eine erfindungsgemäße Elektrodenplatte ist und die erste Stromübertragerstruktur durch die integrierte Stromübertragerstruktur der ersten Elektrodenplatte gebildet ist und/oder wobei die zweite Elektrodenplatte eine erfindungsgemäße Elektrodenplatte ist und die zweite Stromübertragerstruktur durch die integrierte Stromübertragerstruktur der zweiten Elektrodenplatte gebildet ist. Durch Stapeln mehrerer solcher Elektrodenpackungseinheiten lässt sich ein entsprechender Stapelaufbau eines elektrochemischen Reaktors, insbesondere eines Elektrolysereaktors oder eines Brennstoffzellenreaktors, realisieren.

Bei der erfindungsgemäßen Elektrodenpackungseinheit ist somit die betreffende Elektrodenplatte elektrisch und mechanisch, insbesondere stoffschlüssig, über den oder die Stromübertragerkörbe mit der Bipolarplatte verbunden, wobei der oder die Stromübertragerkörbe mit ihren drucksteifen Korbseitenwänden für die Einhaltung eines definierten, vorgebbaren Abstandes der Bipolarplatte zur jeweiligen Elektrodenplatte sorgen. Für die Elektrodenpackungseinheit gelten durch den Einsatz der jeweiligen erfindungsgemäßen Elektrodenplatte die oben zu letzterer erwähnten Eigenschaften und Vorteile analog.

Optional können bei Fertigung der Elektrodenplatten aus unbeschichteten Blechen die unterschiedlichen Elektrodenflächen der Elektrodenplatten der Elektrodenpackungseinheit komplett galvanisch dadurch beschichtet werden, dass die Elektrodenpackungseinheit in ein zugehöriges Galvanisierungsbad getaucht wird. Durch Eintauchen der Elektrodenplatten und Bipolarplatte als Einzelteile im nicht zusammengebauten Zustand oder durch Abdecken einzelner Teile im zusammengebauten Zustand können gezielt Teile der Elektrodenpackungseinheit galvanisch beschichtet werden. Es ist alternativ optional auch möglich, die Elektrodenplatten nach dem Zusammenbau der Elektrodenpackungseinheit beispielsweise mittels eines Plasmabeschichtungsverfahrens zu beschichten, womit ein Hintersprühen von Elektrodenschweißflächen vermieden werden kann, mit denen die Fixierung an der Bipolarplatte erfolgt, was die Schweißnahtverbindung optimieren kann. Zudem kann dabei ein Teil der beim Beschichtungsprozess eingetragenen thermischen Energie über die Bipolarplatte nach außen abgeführt werden, wodurch ein thermischer Verzug der Elektrodenplatte vermieden bzw. minimiert werden kann.

In einer Weiterbildung der Erfindung ist an der Bipolarplatte mindestens eine Plateaufläche der ersten Stromübertragerstruktur überlappend zu einer Plateaufläche der zweiten Stromübertragerstruktur angeordnet. Diese Ausführung hat den Vorteil, dass die fluchtend beidseits der Bipolarplatte angeordneten Verbindungsstellen gleichzeitig z.B. mittels zweier auf die zugehörigen Plateauflächen des Stromübertragerkorbs wirkenden Schweißelektroden hergestellt werden können, d.h. die Schweißelektroden verbinden direkt die drei Metalllagen mit einem Schweißpunkt. Alternativ kann eine solche fluchtende Anordnung von Verbindungsstellen unterbleiben, wenn dies bei entsprechenden Anwendungen günstig ist.

In einer Weiterbildung der Erfindung ist an der Bipolarplatte mindestens eine Plateaufläche der ersten Stromübertragerstruktur versetzt zu den Plateauflächen der zweiten Stromübertragerstruktur angeordnet, und/oder mindestens eine Plateaufläche der zweiten Stromübertragerstruktur ist versetzt zu den Plateauflächen der ersten Stromübertragerstruktur mit der Bipolarplatte angeordnet. Diese Realisierung eignet sich für Anwendungen, bei denen ein örtlich versetztes Verbinden, insbesondere Anschweißen, der Plateauflächen der einen Elektrodenplatte mit der Bipolarplatte gegenüber demjenigen der Plateauflächen der anderen Elektrodenplatte mit der Bipolarplatte bevorzugt ist. Ein solches versetztes Anschweißen der Stromübertragerkörbe der beiden Elektrodenplatten an die Bipolarplatte kann thermischen Verzug reduzieren, wie er insbesondere beim Einsatz relativ dünner Bipolarplatten auftreten kann. Denn durch das versetzte Anschweißen kann sich der Wärmeeintrag gleichmäßiger über die Bipolarplattenfläche hinweg verteilen. Wenn dies im entsprechenden Anwendungsfall kein Problem ist, können alle Verbindungsstellen alternativ fluchtend an der Bipolarplatte angeordnet sein.

In einer Weiterbildung der Erfindung ist ein Abstand des Plattenhauptteils der ersten Elektrodenplatte von der Bipolarplatte durch den Abstand der Plateauflächen der ersten Stromübertragerstruktur vom Plattenhauptteil der ersten Elektrodenplatte festlegbar, und/oder der Abstand des Plattenhauptteils der zweiten Elektrodenplatte von der Bipolarplatte ist durch den Abstand der Plateauflächen der zweiten Stromübertragerstruktur vom Plattenhauptteil der zweiten Elektrodenplatte festlegbar. Dies hat den Vorteil, dass die Abstände des Plattenhauptteils der jeweiligen Elektrodenplatte von der Bipolarplatte bei Bedarf auch unterschiedlich festgelegt werden können, indem die Stromübertragerkörbe für die eine Elektrodenplatte mit größerer Ausstelltiefe als die Stromübertragerkörbe bei der anderen Elektrodenplatte ausgestellt werden. Damit lassen sich beispielsweise Ungenauigkeiten beim Zusammenbau der Elektrodenpackungseinheit, wie eine nicht genau mittige Platzierung der Elektrodenpackungseinheit oder einer Membran der Bipolarplatte in einem Zellrahmen, durch Wahl unterschiedlicher Abstände zwischen der Bipolarplatte einerseits und der kathodischen bzw. der anodischen Elektrodenplatte andererseits ausgleichen.

Vorteilhafte Ausführungsformen der Erfindung sind in den Zeichnungen dargestellt. Diese und weitere Ausführungsformen der Erfindung werden nachfolgend näher erläutert. Hierbei zeigen:
- Fig. 1: eine schematische ausschnittweise Schnittansicht einer Elektrodenpackungseinheit mit Bipolarplatte und beidseitig angeordneten Elektrodenplatten,
- Fig. 2: eine perspektivische Draufsicht auf eine Seite der Elektrodenpackungseinheit von Fig. 1,
- Fig. 3: eine perspektivische Draufsicht auf einen von mehreren Stromübertragerkörben der Elektrodenplatten,
- Fig. 4: die Ansicht von Fig. 2 für eine Ausführungsvariante der Elektrodenplatte mit modifizierten Stromübertragerkörben,
- Fig. 5: eine Detailansicht eines Bereichs V von Fig. 4,
- Fig. 6: die Ansicht von Fig. 3 für einen weiteren modifizierten Stromübertragerkorb und
- Fig. 7: eine ausschnittweise Perspektivansicht auf eine Elektrodenplattenausführung mit Klappenöffnungsmuster.

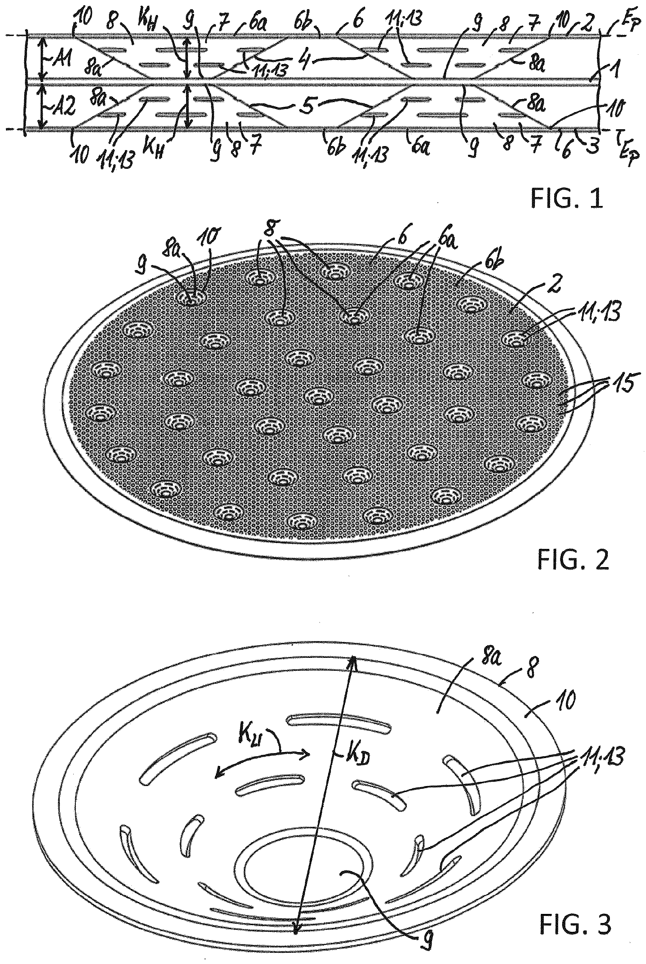

Die in Fig. 1 schematisch mit ihren hier interessierenden Komponenten gezeigte Elektrodenpackungseinheit ist für einen Stapelaufbau eines elektrochemischen Reaktors, insbesondere eines Elektrolysereaktors oder eines Brennstoffzellenreaktors, bestimmt und geeignet, speziell beispielsweise zur Wasserelektrolyse. Der Stapelaufbau beinhaltet einen Block bzw. Stapel oder Stack aus mehreren solchen gestapelten Elektrodenpackungseinheiten, wie dies dem Fachmann an sich bekannt ist. Die gezeigte Elektrodenpackungseinheit besitzt einen an sich üblichen Aufbau mit einer fluiddichten Bipolarplatte 1 herkömmlicher Art, einer ersten Elektrodenplatte 2, die auf der einen Seite der Bipolarplatte 1 angeordnet ist, und einer zweiten Elektrodenplatte 3, die auf der anderen Seite der Bipolarplatte 1 angeordnet ist. Des Weiteren beinhaltet die Elektrodenpackungseinheit eine erste Stromübertragerstruktur 4, durch welche die Bipolarplatte 1 elektrisch und mechanisch mit der ersten Elektrodenplatte 2 verbunden ist, sowie eine zweite Stromübertragerstruktur 5, durch welche die Bipolarplatte 1 elektrisch und mechanisch mit der zweiten Elektrodenplatte 3 verbunden ist.

Im gezeigten Beispiel von Fig. 1 sind beide Elektrodenplatten 2, 3 jeweils als erfindungsgemäße Elektrodenplatte für einen Stapelaufbau eines elektrochemischen Reaktors, wie eines Elektrolysereaktors oder eines Brennstoffzellenreaktors, realisiert. Die Fig. 2 bis 7 zeigen verschiedene erfindungsgemäße Ausführungen für die jeweilige Elektrodenplatte 2, 3. In alternativen, nicht gezeigten Ausführungen besitzt nur eine der beiden Elektrodenplatten 2, 3 den erfindungsgemäßen Aufbau.

In der erfindungsgemäßen Ausführung umfasst die Elektrodenplatte 2, 3 einen Plattenkörper 6 und eine integrierte Stromübertragerstruktur 7, die einteiliger Bestandteil des Plattenkörpers 6 ist. Die Stromübertragerstruktur 7 besteht aus mindestens einem Stromübertragerkörper, der in einem Stromübertragungsbereich 6a des Plattenkörpers 6 von einem Plattenhauptteil 6b des Plattenkörpers 6 vorstehend als ein Stromübertragerkorb 8 gebildet ist, indem der Stromübertragerkörper eine korbförmige Gestalt aufweist. Dabei ist mit Plattenhauptteil 6b der verbleibende Teil des Plattenkörpers 6 außerhalb des Stromübertragungsbereichs 6a bezeichnet, während der Stromübertragungsbereich 6a denjenigen Teil des Plattenkörpers 6 bezeichnet, in dem der oder die Stromübertragerkörper ausgebildet sind. Der Plattenhauptteil 6b ist vollständig oder jedenfalls im Wesentlichen plan und seine zugehörige plane Fläche liegt somit im Wesentlichen in einer dadurch definierten Ebene Ep des Plattenkörpers 6. Sie lässt sich mit Hilfe des zu übertragenden Stroms und den spezifischen Leitfähigkeiten der Stromübertragerkörbe, der Bipolarplatte und des verwendeten Verbindungsmaterials, z.B. für das gewählte Schweissmaterial, technisch in geeigneter Weise auslegen, wie dem Fachmann an sich bekannt.

Der Stromübertragerkörper bzw. Stromübertragerkorb 8 ist von dem entsprechend umgeformten Stromübertragungsbereich 6a des Plattenkörpers 6 gebildet und beinhaltet eine vom Plattenhauptteil 6b des Plattenkörpers 6 beabstandete, zur Kontaktierung mit der Bipolarplatte 1 des Stapelaufbaus eingerichtete Plateaufläche 9 und eine die Plateaufläche 9 mit einem Rand 10 des Stromübertragungsbereichs 6a, der dadurch auch einen Rand des Stromübertragerkorbs 8 bildet, verbindende Verbindungsstruktur, die durch eine drucksteife und elektrisch leitende Korbseitenwand 8a des Stromübertragerkorbs 8 gebildet ist. Der Abstand der Plateaufläche 9 vom Plattenhauptteil 6b des Plattenkörpers 6 entspricht hierbei einer Korbhöhe K_{H} des Stromübertragerkorbs 8, d.h. dem Abstand des als Plateaufläche 9 fungierenden Korbbodens vom in der Ebene Ep des Plattenkörpers 6 liegenden Korbrand 10.

Aufgrund der Verwendung zweier erfindungsgemäßer Elektrodenplatten für die erste und die zweite Elektrodenplatte 2, 3 der in Fig. 1 gezeigten Elektrodenpackungseinheit ist deren erste Stromübertragerstruktur 4 durch die integrierte Stromübertragerstruktur 7 der ersten Elektrodenplatte 2 gebildet, und deren zweite Stromübertragerstruktur 5 ist durch die integrierte Stromübertragerstruktur 7 der zweiten Elektrodenplatte 3 gebildet.

Im gezeigten Beispiel von Fig. 1 sind die beiden Elektrodenplatten 2, 3 der Elektrodenpackungseinheit von identischer Bauart, in nicht gezeigten, alternativen Realisierungen sind sie von unterschiedlicher Bauart, z.B. unter Verwendung unterschiedlicher Stromübertragerkörbe 8 für die beiden Elektrodenplatten 2, 3. Die Verwendung unterschiedlicher Stromübertragerkörbe für die beiden Elektrodenplatten 2, 3 kann z.B. bei der Wasserelektrolyse zweckmäßig sein, da während des Gaserzeugungsprozesses sauerstoffseitig prinzipiell nur die Hälfte des Gasvolumens der Wasserstoffseite erzeugt wird. Des Weiteren sind in den gezeigten Beispielen alle Stromübertragerkörbe 8 der jeweiligen Elektrodenplatte 2, 3 identisch gestaltet. In alternativen Ausführungen können bei einer Elektrodenplatte unterschiedlich geformte Stromübertragerkörbe 8 verwendet sein.

In den gezeigten Ausführungsbeispielen besitzen die Elektrodenplatten 2, 3 und die Bipolarplatte 1 und damit auch die Elektrodenpackungseinheit eine kreisrunde Form. In alternativen Ausführungen kann eine beliebige andere Form gewählt sein, z.B. eine ovale, rechteckige oder anderweitig polygonale Form.

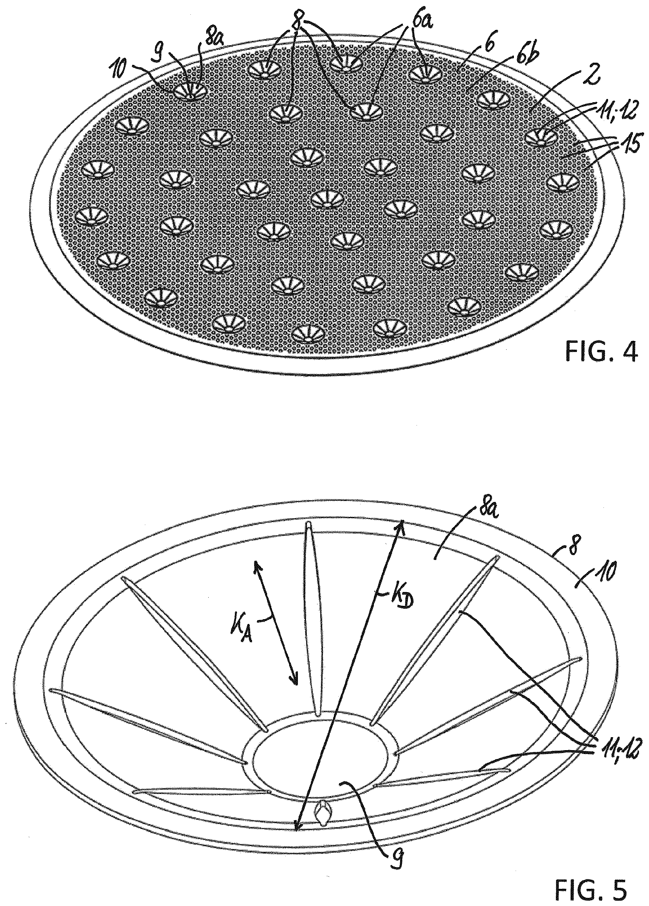

In den gezeigten Ausführungsbeispielen weist die jeweilige Elektrodenplatte 2, 3 eine Mehrzahl der Stromübertragerkörbe 8 in einer über die Flächenausdehnung der Elektrodenplatte 2, 3 hinweg gleichmäßig verteilten, z.B. konzentrischen Anordnung auf, wie aus den Fig. 2 und 4 ersichtlich, wobei die Verteilung der Stromübertragerkörbe 8 zweckmäßigerweise an die Form der Elektrodenplatte 2, 3 angepasst ist, um einen möglichst gleichmäßigen Stromtransport über die Flächenausdehnung der Elektrodenplatte 2, 3 hinweg zu gewährleisten. In entsprechenden Ausführungen sind beispielsweise zwischen zehn und fünfzig Stromübertragerkörbe 8 auf einer Elektrodenplattenfläche zwischen zweitausend und dreitausend Quadratzentimeter angeordnet.

In vorteilhaften Ausführungsformen weist die Korbseitenwand 8a eine Öffnungsstruktur 11 auf, wie dies bei den gezeigten Ausführungsbeispielen der Fall ist. Die Öffnungsstruktur 11 beinhaltet eine oder bevorzugt mehrere Öffnungen, die vorzugsweise dadurch gebildet werden, dass in den Stromübertragungsbereich 6a des Plattenkörpers 6 vor dem Umformen entsprechende Schlitze bzw. Aussparungen eingebracht werden, z.B. durch Laserschneiden, die sich dann beim Umformen des Stromübertragungsbereichs 6a in den Stromübertragerkorb 8 etwas weiten, wodurch die Materialstärke im umgeformten Bereich im Wesentlichen konstant gehalten werden kann oder sich jedenfalls nicht sehr stark verringern braucht. Das Herausformen des Stromübertragerkorbs 8 aus dem Material der Elektrodenplatte 2, 3 bzw. des Plattenkörpers 6 oder genauer gesagt einem zugehörigen Plattenrohling hat daher keinen oder jedenfalls nur einen relativ geringen Verlust an elektrodeneffektiver Materialfläche der Elektrodenplatte 2, 3 bzw. des Plattenkörpers 6 zur Folge. Speziell kann der Verlust an elektrodeneffektiver Materialfläche auf höchstens 3% bis 5% begrenzt werden. Bei herkömmlichen Elektrodenplatten mit integriert herausgearbeiteter Stromübertragerstruktur liegt der Verlust im Vergleich dazu typischerweise bei deutlich über 10%.

In vorteilhaften Realisierungen der Elektrodenplatte 2, 3 besitzt die Öffnungsstruktur 11 einen Öffnungsflächenanteil von höchstens 45% einer Gesamtfläche der Korbseitenwand 8a. In spezielleren Realisierungen beträgt der Öffnungsflächenanteil nur höchstens 30% an der Gesamtfläche der Korbseitenwand 8a. In noch spezielleren, bevorzugten Realisierungen beträgt der Öffnungsflächenanteil höchstens ca. 10% der Gesamtfläche der Korbseitenwand 8a. Umgekehrt gesprochen bedeutet dies, dass der Flächen- bzw. Materialanteil des Plattenmaterials der Korbseitenwand 11a bezogen auf die Gesamtausdehnung der Korbseitenwand 11a bei diesen Realisierungen der Elektrodenplatte 2, 3 mindestens 65% bzw. mindestens 70% oder bevorzugt mindestens 90% beträgt.

In vorteilhaften Ausführungsformen weist die Öffnungsstruktur 11 mindestens eine axiale Schlitzöffnung 12 auf, die sich mit einer Hauptrichtungskomponente in einer Korbaxialrichtung K_{A} erstreckt. Ein zugehöriges Ausführungsbeispiel ist in den Fig. 4 und 5 gezeigt. Speziell beinhaltet der jeweilige Stromübertragerkorb 8 in diesem Beispiel mehrere axiale Schlitzöffnungen 12, z.B. acht Schlitzöffnungen 12, die sich jeweils rein in Axial-/Radialrichtung ohne Umfangsrichtungskomponente erstrecken. Zudem erstreckt sich in diesem Beispiel die jeweilige axiale Schlitzöffnung 12 durchgehend von der Plateaufläche 9, die den Boden des Stromübertragerkorbs 8 bildet, bis zum Rand 10 des Stromübertragungsbereichs 6a bzw. des Stromübertragerkorbs 9.

In vorteilhaften Ausführungsformen weist die Öffnungsstruktur 11 mindestens eine transversale Schlitzöffnung 13 auf, die sich mit einer Hauptrichtungskomponente in einer Korbumfangsrichtung Ku erstreckt. Das Ausführungsbeispiel der Fig. 1 bis 3 ist eine solche Ausführungsform, wobei die Öffnungsstruktur 12 in diesem Fall eine Mehrzahl solcher transversaler Schlitzöffnungen 13 aufweist. Konkret sind die Schlitzöffnungen 13 in diesem Beispiel rein in der Umfangsrichtung Ku ohne Komponente in Axial- bzw. Radialrichtung verlaufend auf zwei unterschiedlichen Radien zwischen der Plateaufläche 9, die den Boden des Stromübertragerkorbs 8 bildet, und dem Rand 10 angeordnet, und zwar vorzugsweise wie gezeigt auf den beiden Radien in Umfangsrichtung gegeneinander in etwa mittig versetzt.

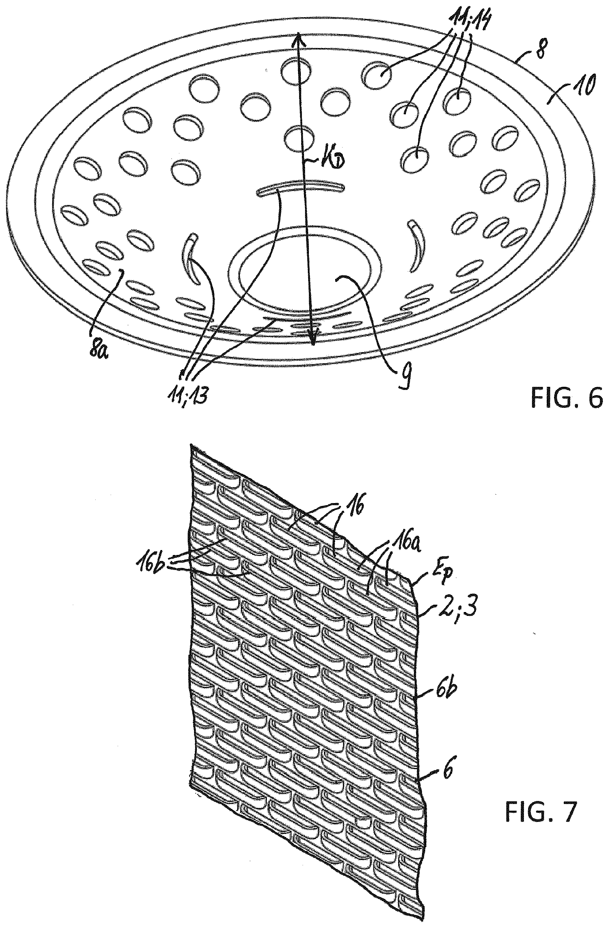

Während bei den Ausführungsbeispielen der Fig. 1 bis 5 die Korbseitenwand 8a mit Ausnahme der axialen bzw. transversalen Schlitzöffnungen 12, 13 keine anderen Öffnungen besitzt, zeigt Fig. 6 ein Ausführungsbeispiel, bei dem die Öffnungsstruktur 11 der Korbseitenwand 8a mehrere der transversalen Schlitzöffnungen 13 und zusätzlich eine Mehrzahl von im Wesentlichen kreisrunden bis schwach ovalen Lochöffnungen 14 beinhaltet. Die Lochöffnungen 14 können beispielsweise solche eines Lochmusters 15 sein, mit dem der Plattenkörper 6 in seinem vorzugweise planen Plattenhauptteil 6b außerhalb des Stromübertragungsbereichs 6a und damit der Stromübertragerkörbe 8 versehen ist, wie dies in den Fig. 2 und 4 für die dortige Elektrodenplatte 2 gezeigt ist. In nicht gezeigten, alternativen Ausführungen kann die Öffnungsstruktur beliebige Kombinationen unterschiedlich geformter, ganz oder überwiegend axial verlaufender oder ganz oder überwiegend transversal verlaufender Schlitze und/oder kreisrunder oder schwach ovaler Lochöffnungen beinhalten.

In entsprechenden Ausführungen der Elektrodenplatte 2, 3 weist die Öffnungsstruktur 11 mindestens eine Klappenöffnung 16 auf, die durch Schlitzen und einseitiges Umbiegen eines korrespondierenden Plattenkörperbereichs innerhalb des Stromübertragungsbereichs 6a des Plattenkörpers 6 gebildet ist und deren grundsätzliche Gestalt in Fig. 7 zu erkennen ist. Optional kann der Plattenkörper 6 zusätzlich oder alternativ in seinem Plattenhauptteil 6b außerhalb des Stromübertragungsbereichs 6a mit einer oder mehreren derartigen Klappenöffnungen 16 versehen sein, insbesondere auch mit einem entsprechenden Klappenöffnungsmuster aus einer Vielzahl von regelmäßig über den Plattenkörper 6 hinweg angeordneten solchen Klappenöffnungen16. In alternativen Ausführungen können eine oder mehrere solche Klappenöffnungen 16 auch nur im Bereich des Plattenkörpers 6 außerhalb des Stromübertragungsbereichs 8 vorgesehen sein.

Fig. 7 veranschaulicht ein Ausführungsbeispiel, bei dem mehrere solche Klappenöffnungen 16 in den Plattenhauptteil 6b der Elektrodenplatte 2, 3 eingebracht sind, wobei je nach Bedarf eine oder mehrere dieser Klappenöffnungen 16 auch nur im Stromübertragungsbereich 6a oder nur im Plattenhauptteil 6b oder in beiden Bereichen 6a, 6b des Plattenkörpers 6 vorgesehen sein können. Wie daraus ersichtlich, beinhaltet die jeweilige Klappenöffnung 16 einen langlochförmigen Öffnungsbereich 16a, der dadurch gebildet ist, dass in das Plattenmaterial ein Schlitz entsprechender Form und Länge eingebracht und dann ein streifenförmiger Bereich des Plattenmaterials auf einer Seite des Schlitzes durch mechanisches Umformen, z.B. Tiefziehen, unter Bildung eines entsprechenden Klappenteils 16b nach hinten gedrückt wird. Im gezeigten Beispiel ist ein geradliniger Schlitz in das Plattenmaterial eingebracht und das Klappenteil 16b taschenförmig derart gebildet, dass die Klappenöffnung 16 bzw. der im Querschnitt langlochförmige Öffnungsbereich 16a einen gebogenen Verlauf mit einem Bogenwinkel von ca. 90° besitzt, indem sie bzw. er sich von einem in der Plattenebene Ep liegenden Eintrittsbereich zu einem Austrittsbereich erstreckt, der in einer zur Plattenebene Ep im Wesentlichen senkrechten Ebene liegt. In einer alternativen Ausführung kann der Schlitz U-förmig in das Plattenmaterial eingebracht sein, und der davon umgebene Bereich des Plattenmaterials wird etwa senkrecht nach hinten von der Plattenebene Ep abstehend umgeformt, während an der Vorderseite des Plattenkörpers 6 der Rand der Klappenöffnung 16 dadurch vorzugsweise etwas gerundet wird. In diesem Fall erstreckt sich die Klappenöffnung 16 geradlinig durch den Plattenkörper 6 hindurch.

Die dergestalt auf die eine oder andere Weise gebildeten Klappenöffnungen 16 können das Abführen von Gasen auf die Rückseite der Elektrodenplatte 2, 3 erleichtern. Dieses Prinzip der Klappenöffnungen 16 lässt sich bei Bedarf auch einfach auf die Tiefziehstruktur der Korbseitenwand 8a des Stromübertragerkorbs 8 anwenden, d.h. die Klappenöffnungen 16 können in der Korbseitenwand 8a durch einen Tiefziehvorgang gebildet werden, z.B. gemeinsam mit der Bildung der vom Plattenkörper 6 ausgestellten Korbseitenwand 8a. Die Ausbildungs- bzw. Längsrichtung der Klappenöffnungen 16 verläuft dann bevorzugt in Korbumfangsrichtung Kᵤ, z.B. auf in einer Anordnung auf mehreren Radien vergleichbar der Anordnung der genannten transversalen Schlitzöffnungen 13.

In vorteilhaften Ausführungen weist der jeweilige Stromübertragerkorb 8 an seinem Rand 10 einen Korbdurchmesser K_{D} von höchstens 60mm auf. In spezielleren Ausführungen beträgt der Korbdurchmesser K_{D} höchstens 40mm, d.h. ca. 40mm oder weniger, z.B. ca. 30mm bis 35mm.

In vorteilhaften Ausführungsformen ist der Stromübertragerkorb 8 eine Tiefziehstruktur, d.h. er ist im Stromübertragungsbereich 8 des Plattenkörpers 6 durch ein herkömmliches Tiefzieh-Umformverfahren aus der Ebene Ep des Plattenkörpers 6, d.h. aus dem Plattenhauptteil 6b, ausgestellt. Die Elektrodenplatte 2, 3 kann in diesem Fall fertigungstechnisch mit relativ geringem Aufwand aus einem Plattenrohling gefertigt werden, in welchen der oder die Stromübertragerkörbe 8 durch Tiefziehen umformend ausgestellt bzw. eingeprägt werden, wobei zuvor gegebenenfalls die für die optionale Öffnungsstruktur 11 benötigten Schlitze bzw. Aussparungen in den Stromübertragungsbereich 6a des Plattenrohlings eingebracht werden, aus dem dann der Plattenkörper 6 der Elektrodenplatte 2, 3 gebildet wird. Der Tiefziehvorgang kann dazu, wie üblich, die Verwendung geeigneter Positiv-/Negativformen beinhalten, welche die gewünschte Korb-/Napfkontur für den Stromübertragerkorb 8 vorgeben.

In vorteilhaften Ausführungen der Elektrodenpackungseinheit ist an der Bipolarplatte 1 mindestens eine Plateaufläche 9 der ersten Stromübertragerstruktur 4 überlappend zu einer Plateaufläche 9 der zweiten Stromübertragerstruktur 5 angeordnet, wobei hierunter vorliegend eine Überlappung in Bezug auf die zur Ebene der Bipolarplatte 1 und damit auch des Plattenhauptteils 6b senkrechte Richtung zu verstehen ist. So ist dies beim Ausführungsbeispiel von Fig. 1 realisiert, wobei vorzugsweise alle Plateauflächen 9 der ersten Stromübertragerstruktur 4 mit je einer der Plateauflächen 9 der zweiten Stromübertragerstruktur 5 überlappen. Im gezeigten Ausführungsbeispiel ist die Überlappung vollständig, d.h. die Plateauflächen 9 liegen sich beidseits der Bipolarplatte 1 jeweils fluchtend gegenüber, wie aus Fig. 1 ersichtlich.

In alternativen, nicht gezeigten Ausführungen der Elektrodenpackungseinheit ist an der Bipolarplatte 1 mindestens eine Plateaufläche 9 der ersten Stromübertragerstruktur 4 versetzt zu den Plateauflächen 9 der zweiten Stromübertragerstruktur 5 angeordnet. In weiteren alternativen, nicht gezeigten Ausführungen der Elektrodenpackungseinheit ist mindestens eine Plateaufläche 9 der zweiten Stromübertragerstruktur 5 versetzt zu den Plateauflächen 9 der ersten Stromübertragerstruktur 4 an der Bipolarplatte angeordnet.

In der Elektrodenpackungseinheit sind die Elektrodenplatten 2, 3 über die Plateauflächen 9 elektrisch leitend und mechanisch fest mit der Bipolarplatte 1 verbunden, z.B. mittels Verschweißen. Durch die Drucksteifigkeit der Korbseitenwände 8a der Stromübertragerkörbe 8 ergibt sich für die Elektrodenpackungseinheit ein druckstabiler Verbund von Bipolarplatte 1 und Elektrodenplatten 2, 3, der sowohl etwaigen gewichtsbedingten Druckbelastungen als auch etwaigen betriebsbedingten Druckbelastungen standhält.

Dies hat den Vorteil, dass die Zellrahmen, in denen die gestapelten Elektrodenpackungseinheiten eines Blocks bzw. Stacks gehalten sind, nicht zur Aufnahme dieser axialen Druckbelastungen ausgelegt werden müssen, so dass für die Realisierung der Zellrahmen beispielsweise flexible Kunststoffmaterialien verwendbar sind, was für viele Anwendungen von Vorteil ist. Um ein Beispiel zu geben, kann in einer typischen Ausführung ein Stack aus 100 bis 140 Elektrodenpackungseinheiten mit einem Gewicht von jeweils ca. 4 bis 7 kg aufgebaut sein. Die erfindungsgemäßen Elektrodenpackungseinheiten sind aufgrund der entsprechend drucksteif ausgeführten Stromübertragerkörbe 8 in der Lage, die daraus resultierenden Gewichtsbelastungen aufzunehmen, selbst wenn die Elektrodenpackungseinheiten im Stack horizontal orientiert sind.

Vorteilhaft ist es bei der erfindungsgemäßen Elektrodenpackungseinheit möglich, wie in Fig. 1 zu erkennen, einen Abstand A1 des Plattenhauptteils 6b der ersten Elektrodenplatte 2 von der Bipolarplatte 1 durch den Abstand der einen oder mehreren Plateauflächen 9 der ersten Stromübertragerstruktur 4 vom Plattenhauptteil 6b, d.h. von der Ebene Ep des Plattenkörpers 6, der ersten Elektrodenplatte 2, d.h. durch die Korbhöhe K_{H} der Stromübertragerkörbe 8 der integrierten Stromübertragerstruktur 7 der ersten Elektrodenplatte 2, festzulegen bzw. vorzugeben.

Zusätzlich oder alternativ kann ein Abstand A2 des Plattenhauptteils 6b der zweiten Elektrodenplatte 3 von der Bipolarplatte 1 durch den Abstand der einen oder mehreren Plateauflächen 9 der zweiten Stromübertragerstruktur 5 vom Plattenhauptteil 6b, d.h. von der Ebene Ep des Plattenkörpers 6, der zweiten Elektrodenplatte 3, d.h. durch die Korbhöhe K_{H} der Stromübertragerkörbe 8 der integrierten Stromübertragerstruktur 7 der zweiten Elektrodenplatte 3, festgelegt werden. Insbesondere ist es möglich, die Abstände A1, A2 des Plattenhauptteils 6b der ersten Elektrodenplatte 2 bzw. des Plattenhauptteils 6b der zweiten Elektrodenplatte 3 von der Bipolarplatte 1 unabhängig voneinander festzulegen, d.h. die beiden Abstände A1, A2 können gleich groß oder verschieden groß vorgegeben werden.

Wie die gezeigten und die weiteren oben beschriebenen Ausführungsbeispiele deutlich machen, stellt die Erfindung eine Elektrodenplatte zur Verfügung, die fertigungstechnisch vergleichsweise einfach realisierbar ist und wesentliche funktionelle Vorteile aufweist, insbesondere hinsichtlich Integration der Stromübertragerstruktur, Druckstabilität der Stromübertragerstruktur, Bereitstellung einer großen effektiven Elektrodenfläche bei gegebener Gesamtausdehnung der Elektrodenplatte und Durchlässigkeit der Elektrodenplatte für den erforderlichen Gas-/Flüssigkeitstransport.

Des Weiteren stellt die Erfindung eine in vorteilhafter Weise mit einer oder mehreren solchen Elektrodenplatten aufgebaute Elektrodenpackungseinheit zur Verfügung, die mit relativ geringem Aufwand aufgebaut werden kann und aus der sich mit relativ geringem Aufwand ein gewünschter Stapel bzw. Block oder Stack für einen entsprechenden elektrochemischen Reaktor aufbauen lässt, wie eines Elektrolysereaktors zur Elektrolyse von Wasser unter Druck oder drucklos, oder eines Brennstoffzellenreaktors.

## Patentansprüche

1. Elektrodenplatte für einen Stapelaufbau eines elektrochemischen Reaktors, insbesondere eines Elektrolysereaktors oder eines Brennstoffzellenreaktors, mit
- einem Plattenkörper (6) und
- einer integrierten Stromübertragerstruktur (7), die einteiliger Bestandteil des Plattenkörpers ist und aus mindestens einem Stromübertragerkörper besteht, der in einem Stromübertragungsbereich (6a) des Plattenkörpers von einem Plattenhauptteil (6b) des Plattenkörpers vorstehend gebildet ist und eine vom Plattenhauptteil (6b) beabstandete, zur Kontaktierung mit einer Bipolarplatte des Stapelaufbaus eingerichtete Plateaufläche (9) und eine die Plateaufläche mit einem Rand (10) des Stromübertragungsbereichs verbindende Verbindungsstruktur beinhaltet,
**dadurch gekennzeichnet, dass**
- der Stromübertragerkörper ein von einem umgeformten Bereich des Plattenkörpers gebildeter Stromübertragerkorb (8) mit einer drucksteifen und elektrisch leitenden Korbseitenwand (8a) ist, welche die Verbindungsstruktur bildet.

2. Elektrodenplatte nach Anspruch 1, weiter **dadurch gekennzeichnet, dass** die Korbseitenwand eine Öffnungsstruktur (11) aufweist.

3. Elektrodenplatte nach Anspruch 2, weiter **dadurch gekennzeichnet, dass** die Öffnungsstruktur einen Öffnungsflächenanteil von höchstens 45% oder höchstens 30% oder höchstens 10% einer Gesamtfläche der Korbseitenwand besitzt.

4. Elektrodenplatte nach Anspruch 2 oder 3, weiter **dadurch gekennzeichnet, dass** die Öffnungsstruktur mindestens eine axiale Schlitzöffnung (12) aufweist, die sich mit einer Hauptrichtungskomponente in Korbaxialrichtung (K_{A}) erstreckt.

5. Elektrodenplatte nach einem der Ansprüche 2 bis 4, weiter **dadurch gekennzeichnet, dass** die Öffnungsstruktur mindestens eine transversale Schlitzöffnung (13) aufweist, die sich mit einer Hauptrichtungskomponente in Korbumfangsrichtung (Ku) erstreckt.

6. Elektrodenplatte nach einem der Ansprüche 2 bis 5, weiter **dadurch gekennzeichnet, dass** die Öffnungsstruktur mindestens eine Klappenöffnung (14) aufweist, die durch Schlitzen und einseitiges Umbiegen eines korrespondierenden Plattenkörperbereichs gebildet ist.

7. Elektrodenplatte nach einem der Ansprüche 1 bis 6, weiter **dadurch gekennzeichnet, dass** der Stromübertragerkorb an seinem Rand einen Korbdurchmesser (K_{D}) von höchstens 60mm oder höchstens 40mm aufweist.

8. Elektrodenplatte nach einem der Ansprüche 1 bis 7, weiter **dadurch gekennzeichnet, dass** der Stromübertragerkorb eine Tiefziehstruktur ist.

9. Elektrodenpackungseinheit für einen Stapelaufbau eines elektrochemischen Reaktors insbesondere eines Elektrolysereaktors oder eines Brennstoffzellenreaktors, mit
- einer fluiddichten Bipolarplatte (1),
- einer ersten Elektrodenplatte (2) und einer zweiten Elektrodenplatte (3), die auf gegenüberliegenden Seiten der Bipolarplatte angeordnet sind, und
- einer ersten Stromübertragerstruktur (4) zur elektrischen und mechanischen Verbindung der Bipolarplatte mit der ersten Elektrodenplatte und einer zweiten Stromübertragerstruktur (5) zur elektrischen und mechanischen Verbindung der Bipolarplatte mit der zweiten Elektrodenplatte,
**dadurch gekennzeichnet, dass**
- die erste Elektrodenplatte (2) eine solche nach einem der Ansprüche 1 bis 8 ist und die erste Stromübertragerstruktur (4) durch die integrierte Stromübertragerstruktur (7) der ersten Elektrodenplatte gebildet ist und/oder
- die zweite Elektrodenplatte (3) eine solche nach einem der Ansprüche 1 bis 8 ist und die zweite Stromübertragerstruktur (5) durch die integrierte Stromübertragerstruktur (7) der zweiten Elektrodenplatte gebildet ist.

10. Elektrodenpackungseinheit nach Anspruch 9, weiter **dadurch gekennzeichnet, dass** an der Bipolarplatte mindestens eine Plateaufläche der ersten Stromübertragerstruktur überlappend zu einer Plateaufläche der zweiten Stromübertragerstruktur angeordnet ist.

11. Elektrodenpackungseinheit nach Anspruch 9 oder 10, weiter **dadurch gekennzeichnet, dass** an der Bipolarplatte mindestens eine Plateaufläche der ersten Stromübertragerstruktur versetzt zu den Plateauflächen der zweiten Stromübertragerstruktur angeordnet ist und/oder mindestens eine Plateaufläche der zweiten Stromübertragerstruktur versetzt zu den Plateauflächen der ersten Stromübertragerstruktur an der Bipolarplatte angeordnet ist.

12. Elektrodenpackungseinheit nach einem der Ansprüche 9 bis 11, weiter **dadurch gekennzeichnet, dass** ein Abstand (A1) eines Plattenhauptteils der ersten Elektrodenplatte von der Bipolarplatte durch einen Abstand der Plateauflächen der ersten Stromübertragerstruktur von der Ebene des Plattenkörpers der ersten Elektrodenplatte festlegbar ist und/oder ein Abstand (A2) eines Plattenhauptteils der zweiten Elektrodenplatte von der Bipolarplatte durch einen Abstand der Plateauflächen der zweiten Stromübertragerstruktur von der Ebene des Plattenkörpers der zweiten Elektrodenplatte festlegbar ist.
